# EUROPÄISCHE PATENTSCHRIFT

(11) **EP 3 178 136 B1**
(45) Veröffentlichungstag und Bekanntmachung des Hinweises auf die Patenterteilung: **12.09.2018**
(21) Anmeldenummer: 15735952.2
(22) Anmeldetag: 09.07.2015
(51) Int. Cl.: B60L 3/00, B60L 3/04, B60L 11/18, H01R 13/66

(54) **STECKVERBINDERTEIL MIT EINER TEMPERATURSENSOREINRICHTUNG**
PLUG CONNECTOR PART HAVING A TEMPERATURE SENSOR DEVICE
CONNECTEUR ENFICHABLE COMPRENANT UN DISPOSITIF DE CAPTEUR DE TEMPÉRATURE

(30) Priorität: 06.08.2014 DE 102014111185
(43) Veröffentlichungstag der Anmeldung: 14.06.2017
(73) Patentinhaber: Phoenix Contact e-Mobility GmbH, 32816 Schieder-Schwalenberg (DE)
(72) Erfinder: FÜHRER, Thomas, 32825 Blomberg (DE); ROSE, Markus, 33102 Paderborn (DE); FINKEN, Bodo, 33617 Bielefeld (DE)
(74) Vertreter: Janke, Christiane
(86) Internationale Anmeldenummer: PCT/EP2015/065688
(87) Internationale Veröffentlichungsnummer: WO 2016/020133

(56) Entgegenhaltungen:
- WO-A1-2012/146766
- WO-A1-2014/032906
- DE-A1-102010 045 131
- DE-A1-102012 200 523
- US-B2- 8 325 454

## Beschreibung

Die Erfindung betrifft ein Steckverbinderteil zum Verbinden mit einem Gegensteckverbinderteil nach dem Oberbegriff des Anspruchs 1.

Ein solches Steckverbinderteil umfasst mindestens ein elektrisches Kontaktelement zum Führen eines elektrischen Stroms und zum Herstellen eines elektrischen Kontakts mit mindestens einem anderen Kontaktelement eines Gegensteckverbinderteils und eine Temperatursensoreinrichtung zum Erfassen einer Erwärmung an dem Steckverbinderteil.

Ein solches Steckverbinderteil kann insbesondere an einer Ladeeinrichtung zum Übertragen eines Ladestroms zum Einsatz kommen. Das Steckverbinderteil kann insbesondere als Ladestecker zum Laden eines elektromotorisch angetriebenen Kraftfahrzeugs (bezeichnet auch als Elektrofahrzeug) ausgebildet sein.

Ladestecker zum Laden von Elektrofahrzeugen sind so auszulegen, dass große Ladeströme übertragen werden können. Weil die thermische Verlustleistung quadratisch mit dem Ladestrom wächst, ist bei solchen Ladesteckern erforderlich, eine Temperaturüberwachung bereitzustellen, um eine Überhitzung an Bauteilen des Ladesteckers frühzeitig zu erkennen und gegebenenfalls eine Modifizierung des Ladestroms oder gar eine Abschaltung der Ladeeinrichtung zu bewirken.

Bei einem aus der EP 2 605 339 A1 bekannten Ladestecker ist ein Temperatursensor an einem Isolierkörper in etwa mittig zwischen Kontaktelementen des Kontaktsteckers angeordnet. Über den Temperatursensor kann erkannt werden, ob irgendwo an den Kontaktelementen es zu einer übermäßigen Erhitzung kommt, um gegebenenfalls ein Abschalten des Ladevorgangs zu bewirken.

Bei einem aus der GB 2 489 988 A bekannten Ladestecker sind mehrere Temperatursensoren vorgesehen, die über eine Leitung Temperaturdaten übermitteln. Abhängig davon, in welchem Temperaturbereich sich die an den Temperatursensoren aufgenommenen Temperaturen befinden, erfolgt eine Regelung eines Ladevorgangs.

Aus der US 6,210,036 B1 ist ein Steckverbinder bekannt, bei dem mehrere Temperatursensoren über eine einadrige Leitung miteinander seriell verkettet sind. Die Temperatursensoren sind an einem Isolierkörper angeordnet und weisen bei einer vorbestimmten Temperatur eine signifikante Widerstandsänderung auf, die so groß ist, dass ein an die Leitung angeschlossener Steuerkreis die Änderung erfassen und den Stromfluss durch den Ladestecker anpassen, gegebenenfalls abschalten kann.

Aus der US 8,325,454 B2 ist ein Stecker bekannt, bei dem einzelnen Kontakten Thermistoren zugeordnet sind, die parallel miteinander verschaltet sind und bei Überschreiten einer Schwelltemperatur einen Thyristor leitend schalten, um auf diese Weise einen Stromfluss durch die Kontakte abzuschalten.

DE 10 2012 200523 A1 zeigt ein Steckverbinderteil mit den Merkmalen des Oberbegriffs des Anspruchs 1.

Bei aus dem Stand der Technik bekannten Ladesteckern sind Temperatursensoren insbesondere in einen Isolierkörper eingebettet. Dies ist erforderlich, um die Temperatursensoren elektrisch von den Kontaktelementen, an denen es zu einer Erwärmung kommen kann, zu isolieren. Dies bringt aber gleichzeitig den Nachteil mit sich, dass eine Temperaturänderung an einem der Kontaktelemente über den Isolierkörper zeitlich verzögert übertragen wird und somit mit zeitlicher Verzögerung an den Temperatursensoren wahrgenommen wird. Insbesondere bei Konzepten, die eine Schnellabschaltung eines Lastkreises im Fehlerfall ermöglichen sollen, sind derartige Anordnungen von Temperatursensoren daher unter Umständen ungeeignet.

Aufgabe der vorliegenden Erfindung ist es, ein Steckverbinderteil mit einer Temperatursensoreinrichtung bereitzustellen, das eine (übermäßige) Erhitzung an einem der Kontaktelemente zügig erkennen kann und somit ein schnelles Einleiten von Gegenmaßnahmen ermöglicht.

Diese Aufgabe wird durch einen Gegenstand mit den Merkmalen des Anspruchs 1 gelöst. Demnach weist die Temperatursensoreinrichtung mindestens ein Sensorelement auf, das ausgebildet ist, eine von dem mindestens einen elektrischen Kontaktelement abgestrahlte Infrarotstrahlung zu detektieren.

Die vorliegende Erfindung geht von dem Gedanken aus, Sensorelemente zu verwenden, die einen Temperaturanstieg an zumindest einem der Kontaktelemente unmittelbar und ohne wesentliche zeitliche Verzögerung erkennen können. In Abkehr von herkömmlichen Konzepten, bei denen insbesondere temperaturabhängige Widerstände zum Einsatz kamen, sollen Sensorelemente verwendet werden, die zur Detektion einer von einem oder mehreren Kontaktelementen abgestrahlten Infrarotstrahlung ausgebildet sind. Bei den Sensorelementen handelt es sich somit um Strahlungssensoren, die eine elektromagnetische Strahlung insbesondere im Bereich der Infrarotstrahlung in einem Wellenlängenbereich zwischen 0,7 µm und 1.000 µm, insbesondere zwischen 1 µm und 100 µm, beispielsweise zwischen 3 µm und 50 µm aufnehmen.

Solche Sensorelemente können aufgebaut sein, wie dies beispielsweise von Wärmebildkameras bekannt ist. Die Sensorelemente sind auf den zu detektierenden Wellenlängenbereich angepasst und geben eine gegebenenfalls räumlich aufgelöste Intensitätsinformation aus, die die Intensitätsverteilung im Wellenlängenbereich anzeigt.

Das Steckverbinderteil weist vorzugsweise mehrere Kontaktelemente auf, von denen zumindest einige als so genannte Leistungskontakte zum Führen von Strömen mit hoher Stromstärke ausgelegt sind. Insbesondere an diesen als Leistungskontakten dienenden Kontaktelementen ist erforderlich, eine Erhitzung frühzeitig zu erkennen. Hierzu können mehrere Sensorelemente vorgesehen sein, von denen jedes einem elektrischen Kontaktelement zugeordnet ist, um von dem zugeordneten Kontaktelement abgestrahlte Infrarotstrahlung zu detektieren.

Jedes Sensorelement ist somit so angeordnet und ausgerichtet, dass es insbesondere die von dem zugeordneten Kontaktelement emittierte Infrarotstrahlung empfängt und detektiert, um anhand der Intensität der empfangenen Infrarotstrahlung auf eine (übermäßige) Erwärmung an dem zugeordneten Kontaktelement zurückzuschließen.

Um eine einfach zu handhabende, an einem Gehäuse des Steckverbinderteils zu montierende Baugruppe zu schaffen, können die Sensorelemente beispielsweise an einer Leiterplatte angeordnet sein, die in das Gehäuse des Steckverbinderteils eingesetzt und an dem Gehäuse des Steckverbinderteils befestigt werden kann. Die Sensorelemente sind vorzugsweise zueinander versetzt an der Leiterplatte angeordnet und befinden sich in einer solchen räumlichen Lage an der Leiterplatte, dass jedes Sensorelement die von einem zugeordneten Kontaktelement abgestrahlte Infrarotstrahlung empfangen kann, um anhand der abgestrahlten Infrarotstrahlung auf eine Erwärmung an dem zugeordneten Kontaktelement zu schließen.

Die Leiterplatte kann beispielsweise zwischen mehreren Kontaktelementen angeordnet sein, wobei eine erste Seite der Leiterplatte hin zu ersten Kontaktelementen und eine zweite Seite der Leiterplatte hin zu zweiten Kontaktelementen weist. Entsprechend der Zuordnung der Sensorelemente zu den Kontaktelementen sind dann einige Sensorelemente an der ersten Seite der Leiterplatte und andere Sensorelemente an der zweiten Seite der Leiterplatte angeordnet, so dass die Sensorelemente jeweils beispielsweise in Gegenüberlage zu den zugeordneten Kontaktelementen an der Leiterplatte angeordnet sind.

Mit der Leiterplatte kann eine Baugruppe von Sensorelementen geschaffen werden, die beispielsweise auch elektronische Komponenten zur Verarbeitung und Auswertung von von den Sensorelementen erzeugten Sensorsignalen aufweisen kann. Mit der Leiterplatte wird somit eine Elektronik bereitgestellt, die die Sensorsignale der einzelnen Sensorelemente verarbeiten kann, um beispielsweise eine maximale Temperatur an den Kontaktelementen zu erfassen, Messwerte zu speichern, ein Wartungsintervall zu berechnen, eine Risikovorhersage zu treffen oder dergleichen.

Zudem ist auch denkbar, ein weiteres Sensorelement zur Erfassung der Außentemperatur außerhalb des Steckverbinderteils an die Leiterplatte anzuschließen, um unter Einbeziehung der Außentemperatur einen relativen Temperaturanstieg innerhalb des Steckverbinderteils zu ermitteln.

Denkbar und möglich ist in diesem Zusammenhang auch, die Sensorelemente an mehr als einer Leiterplatte anzuordnen, die in geeigneter Weise miteinander verschaltet sind. Es wird somit eine Baugruppe von mehreren Leiterplatten mit daran angeordneten Sensorelementen geschaffen, bei der die Leiterplatten in flexibler Weise innerhalb des Gehäuses des Steckverbinderteils angeordnet werden können.

Die Leiterplatte ist vorzugsweise plattenförmig ausgebildet und entlang ihrer Erstreckungsebene derart in einem Gehäuse des Steckverbinderteils angeordnet, dass sich die Leiterplatte entlang einer Einsteckrichtung, in die das mindestens eine Kontaktelement steckend mit mindestens einem Kontaktelement eines zugeordneten Gegensteckverbinderteils in Eingriff gebracht werden kann, und entlang einer Querrichtung quer zur Einsteckrichtung erstreckt. Die Leiterplatte erstreckt sich somit flächig in paralleler Richtung zu den Kontaktelementen, was eine räumlich günstige Anordnung zwischen den Kontaktelementen ermöglicht.

Weil die Sensorelemente eine von den Kontaktelementen emittierte Infrarotstrahlung empfangen, können die Sensorelemente räumlich getrennt und somit mit Abstand zu den Kontaktelementen angeordnet sein. Die von den Kontaktelementen emittierte Infrarotstrahlung wird über die Luft hin zu den Sensorelementen übertragen und dort detektiert. Weil die Sensorelemente beabstandet zu den Kontaktelementen sein können, kann eine vorteilhafte elektrische Isolation zwischen den Kontaktelementen und den Sensorelementen bereitgestellt werden, ohne dass hierzu ein (zusätzlicher) Isolierköper zwischen den Kontaktelementen und den Sensorelementen angeordnet werden muss.

Um den Strahlungsempfang an den Sensorelementen zu verbessern, ist auch denkbar und möglich, zwischen einem Kontaktelement und einem zugeordneten Sensorelement ein Leitelement zum Leiten von Infrarotstrahlung von dem Kontaktelement hin zu dem zugeordneten Sensorelement anzuordnen. Das Leitelement ist für den relevanten, zu detektierenden Bereich der Infrarotstrahlung transparent und leitet vom Kontaktelement emittierte, in das Leitelement eingekoppelte Strahlung hin zu dem Sensorelement. Ein solches Leitelement kann beispielsweise aus einem Glasmaterial oder einem sonstigen Material zum Leiten von Infrarotstrahlung hergestellt sein.

Ein solches Leitelement ist nicht notwendigerweise als massiver Körper ausgestaltet, sondern kann beispielsweise auch als Hohlkörper ausgebildet sein, der eine für Infrarotstrahlung reflektierende Innenwandung aufweist. Ein solches Leitelement kann Infrarotstrahlung in seinem Inneren von einem Kontaktelement hin zu einem zugeordneten Sensorelement leiten.

Durch Verwendung eines solchen Leitelements ist grundsätzlich auch möglich, Infrarotstrahlung von mehreren Kontaktelementen hin zu einem einzigen Sensorelement zu leiten. In diesem Fall ist ein Sensorelement mehreren Kontaktelementen zugeordnet, so dass über das Sensorelement die Infrarotstrahlung von mehreren Kontaktelementen gemeinsam empfangen werden kann. Dies ermöglicht zwar unter Umständen keine Temperaturbestimmung an einzelnen Kontaktelementen. Ist jedoch allein die Information, ob (irgendwo) im Steckverbinderteil eine Überhitzung auftritt, von Bedeutung, um beispielsweise ein Abschalten eines Ladestroms zu bewirken, so kann mittels des einen Sensorelements durch Auswertung der insgesamt empfangenen Infrarotstrahlung erfasst werden, ob an irgendeinem Kontaktelement gegebenenfalls eine Überhitzung auftritt.

Ein solches Leitelement, das mehreren Kontaktelementen zugeordnet ist, kann beispielsweise einen Innenraum aufweisen, in den hinein sich mehrere Kontaktelemente des Steckverbinderteils erstrecken. Über das Leitelement wird von den Kontaktelementen emittierte Infrarotstrahlung hin zu einem oder gegebenenfalls auch mehreren Sensorelementen geleitet, so dass an dem einen oder den mehreren Sensorelementen die von den Kontaktelementen emittierte Infrarotstrahlung empfangen werden kann.

Der Innenraum des Leitelements ist vorzugsweise von einer Innenwandung begrenzt, die für Infrarotstrahlung reflektierend ist. Ein solches Leitelement kann beispielsweise aus Kunststoff hergestellt sein und an seiner Innenwandung mit einer reflektierenden Beschichtung versehen sein. Denkbar und möglich ist aber auch, das Leitelement beispielsweise aus einem Metall, beispielsweise Stahl oder Kupfer, herzustellen und an seiner Innenwandung für eine vorteilhafte Reflektion zu polieren. In diesem Fall kann eine reflektierende Beschichtung auch entfallen.

Der Gedanke, mehrere Sensorelemente an einer Leiterplatte anzuordnen und somit zu einer Baugruppe zusammenzufassen, ist auch anwendbar auf Sensorelemente, die generell geeignet sind, eine Temperatur an einem oder mehreren Kontaktelementen zu erfassen und nicht notwendigerweise als Infrarotsensoren ausgebildet sind.

Beispielsweise können mehrere Sensorelemente als temperaturabhängige Widerstände ausgebildet sein, deren Widerstand beispielsweise mit steigender Temperatur steigt (sogenannte PTC-Widerstände). Solche temperaturabhängigen Widerstände können eine nichtlineare Kennlinie aufweisen derart, dass bei Überschreiten einer Schwelltemperatur der Widerstandswert an dem Widerstand nichtlinear ansteigt, und beispielsweise aus einem Keramikmaterial hergestellt sein, das bei Überschreiten einer materialspezifischen Schwellwerttemperatur einen (starken) nichtlinearen Widerstandsanstieg aufweist.

Auch andere Temperatursensoren in Form von elektrischen oder elektronischen Bauelementen sind denkbar und möglich, die eine Temperatur an einem Kontaktelement direkt oder indirekt erfassen.

Bei Verwendung von Sensorelementen, die beispielsweise als temperaturabhängige Widerstände ausgebildet sind, können Leitelemente zwischen den Kontaktelementen und den Sensorelementen angeordnet sein, die derart wärmeleitfähig sind, dass an einem Kontaktelement bestehende Wärme hin zu einem zugeordneten Sensorelement geleitet wird. Über das Sensorelement wird die Wärme detektiert und ein entsprechendes Sensorsignal ausgegeben.

Der der Erfindung zugrunde liegende Gedanke soll nachfolgend anhand der in den Figuren dargestellten Ausführungsbeispiele näher erläutert werden. Es zeigen:
- Fig. 1: eine schematische Ansicht eines Elektrofahrzeugs mit einer daran angeschlossenen Ladeeinrichtung;
- Fig. 2A: eine perspektivische Ansicht eines Steckverbinderteils mit einer Temperatursensoreinrichtung;
- Fig. 2B: eine Frontalansicht des Steckverbinderteils gemäß Fig. 2A;
- Fig. 2C: eine gesonderte Ansicht der Temperatursensoreinrichtung;
- Fig. 3A: eine perspektivische Ansicht eines Steckverbinderteils mit einem anderen Ausführungsbeispiel einer Temperatursensoreinrichtung;
- Fig. 3B: eine Frontalansicht des Steckverbinderteils gemäß Fig. 3A;
- Fig. 3C: eine gesonderte Ansicht der Temperatursensoreinrichtung;
- Fig. 4A: eine perspektivische Ansicht eines Steckverbinderteils mit einem wiederum anderen Ausführungsbeispiel einer Temperatursensoreinrichtung;
- Fig. 4B: eine Frontalansicht des Steckverbinderteils gemäß Fig. 4A;
- Fig. 4C: eine gesonderte, perspektivische Ansicht eines Leitelements der Temperatursensoreinrichtung; und
- Fig. 4D: eine andere perspektivische Ansicht des Leitelements.

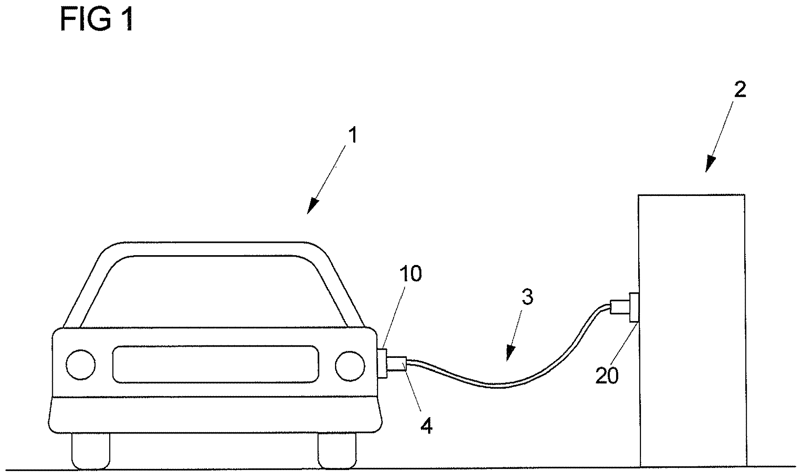

Fig. 1 zeigt in einer schematischen Ansicht ein Fahrzeug 1 in Form eines elektromotorisch angetriebenen Fahrzeugs (nachfolgend bezeichnet als Elektrofahrzeug). Das Elektrofahrzeug 1 verfügt über elektrisch aufladbare Batterien, über die ein Elektromotor zum Fortbewegen des Fahrzeugs 1 elektrisch versorgt werden kann.

Um die Batterien des Fahrzeugs 1 aufzuladen, kann das Fahrzeug 1 über ein Ladekabel 3 an eine Ladestation 2 angeschlossen werden. Das Ladekabel 3 kann hierzu mit einem Steckverbinderteil 4 an einem Ende in eine zugeordnete Ladebuchse 10 des Fahrzeugs 1 eingesteckt werden und steht an seinem anderen Ende mit einer geeigneten Ladebuchse 20 an der Ladestation 2 in elektrischer Verbindung. Über das Ladekabel 3 werden Ladeströme mit vergleichsweise großer Stromstärke hin zum Fahrzeug 1 übertragen.

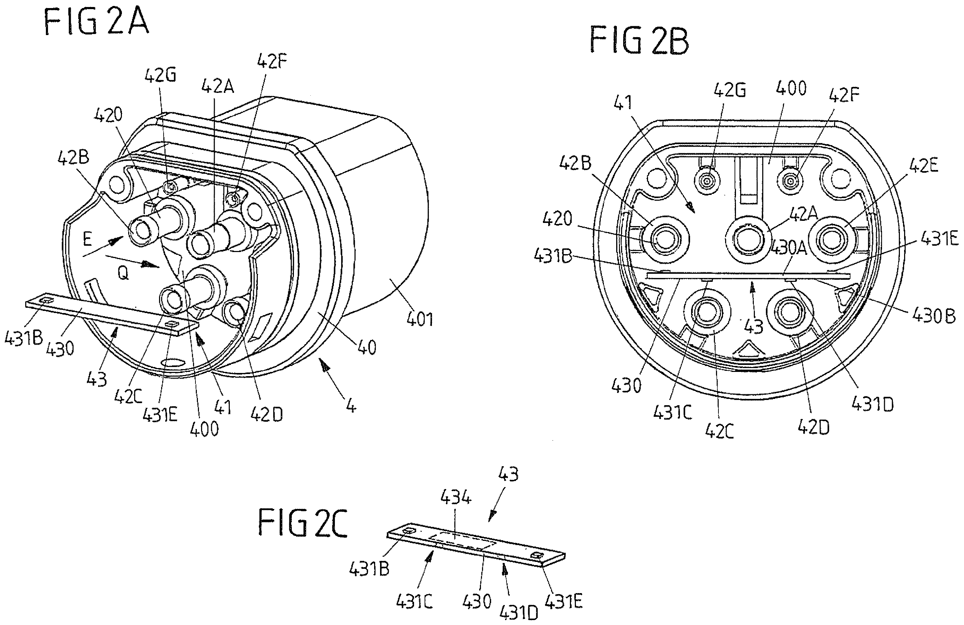

Ein erstes Ausführungsbeispiel eines Steckverbinderteils 4 in Form eines Ladesteckers zeigen Fig. 2A bis 2C. Das Steckverbinderteil 4 umfasst ein Gehäuse 40 mit einem Steckabschnitt 401, der steckend mit der zugeordneten Ladebuchse 10 an dem Fahrzeug 1 (siehe Fig. 1) in Eingriff gebracht werden kann. In den Steckabschnitt 401 ragen entlang einer Einsteckrichtung E längserstreckte Kontaktelemente 42A-42G hinein, die an einem Boden 400 des Gehäuses 40 angeordnet sind und in an sich bekannter Weise mit zugeordneten Kontaktstiften der Ladebuchse 10 steckend in die Einsteckrichtung E in Eingriff gebracht werden können.

Rückwärtig des Steckabschnitts 401 ragen die Kontaktelemente 42A-42G mit Schäften 420 in einen Gehäuseraum 41 des Gehäuses 40 hinein. Über ihre Schäfte 420 können die Kontaktelemente 42A-42G mit zugeordneten elektrischen Leitungen (in Fig. 2A bis 2C nicht dargestellt) verbunden werden.

Von den Kontaktelementen 42A-42G dienen die entlang eines Halbkreises um das zentrale, als Nullleiter dienende Kontaktelement 42A angeordneten Kontaktelemente 42B-42E als sogenannte Leistungskontakte zum Übertragen der (großen) Ladeströme. Entsprechend kann es insbesondere an diesen Kontaktelementen 42B-42E zu einer Überhitzung kommen, wenn sich lokal beispielsweise aufgrund eines Materialfehlers oder eines Defekts sich der Widerstand erhöht und somit lokal eine große thermische Leistung freigesetzt wird.

Um eine eventuelle Überhitzung an einem der Kontaktelemente 42B-42E zu erkennen, ist eine Sensoreinrichtung 43 vorgesehen, die eine Leiterplatte 430 und daran angeordnete Sensorelemente 431B-431E aufweist. Die Sensorelemente 431B-431E sind derart an der Leiterplatte 130 angeordnet, dass sie jeweils in Gegenüberlage zu einem zugeordneten Kontaktelement 42B-42E sind (siehe Fig. 2B) und somit eine etwaige Erhitzung an einem jeweils zugeordneten Kontaktelement 42B-42E detektieren können.

Die Leiterplatte 430 erstreckt sich bei dem dargestellten Ausführungsbeispiel in einer Erstreckungsebene, die durch die Einsteckrichtung E und eine Querrichtung Q senkrecht zur Einsteckrichtung E aufgespannt ist. Die Leiterplatte 430 ist plattenförmig ausgebildet und räumlich zwischen den zu überwachenden Kontaktelementen 42B-42E angeordnet derart, dass die an der Leiterplatte 430 angeordneten Sensorelemente 431B-431E jeweils in Gegenüberlage zu den zugeordneten Kontaktelementen 42B-42E sind und dabei zumindest näherungsweise jeweils einen gleichen Abstand zu den zugeordneten Kontaktelementen 42B-42E aufweisen.

Die Sensorelemente 431B-431E sind an unterschiedlichen Seiten 430A, 430B der Leiterplatte 430 angeordnet. Insbesondere sind die Sensorelemente 431B, 431E an der hin zu den Kontaktelementen 42B, 42E weisenden Seite 430A der Leiterplatte 430 angeordnet, während die Sensorelemente 431C, 431D an der abgewandten, anderen Seite 430B der Leiterplatte 430 angeordnet sind, die hin zu den Kontaktelementen 42C, 42D weist.

Die Sensorelemente 431B-431E sind bei dem dargestellten Ausführungsbeispiel jeweils mit Abstand zu dem jeweils zugeordneten Kontaktelement 42B-42E angeordnet derart, dass ein Luftzwischenraum zwischen den Kontaktelementen 42B-42E und den Sensorelementen 432B-431E besteht. Auf diese Weise wird eine elektrische Isolation zwischen den Kontaktelementen 42B-42E und den Sensorelementen 431B-431E geschaffen, ohne dass ein zusätzlicher Isolationsköper aus einem elektrisch isolierenden Material erforderlich ist.

Die Sensorelemente 431B-431E sind bei dem dargestellten Ausführungsbeispiel als Infrarotsensoren zum Empfangen einer von den Kontaktelementen 42B-42E emittierten Infrarotstrahlung ausgestaltet. Die Sensorelemente 431B-431E empfangen die von den Kontaktelementen 42B-42E ausgestrahlte Infrarotstrahlung und wandeln diese in eine Intensitätsinformation um, anhand derer auf die Temperatur an den Kontaktelementen 42B-42E geschlossen werden kann.

Weil jedes Sensorelement 431B-431E genau einem Kontaktelement 42B-42E zugeordnet ist und aufgrund der Gegenüberlage mit dem zugeordneten Kontaktelement 42B-42E (überwiegend) Infrarotstrahlung von dem zugeordneten Kontaktelement 42B-42E empfängt, kann mittels der Sensoreinrichtung 43 die Temperatur an den einzelnen Kontaktelementen 42B-42E gesondert erfasst und überwacht werden. Zur Auswertung von von den Sensorelementen 431B-431E erhaltenen Sensorsignalen kann hierzu an der Leiterplatte 430 eine Elektronikeinrichtung 434 angeordnet sein (schematisch dargestellt in Fig. 2C), die zur Verarbeitung der Sensorsignale dient und beispielsweise eine momentane Maximaltemperatur an den einzelnen Kontaktelementen 42B-42E ermittelt, Temperaturwerte über die Zeit speichert, eine Wartungsintervallberechnung durchführt, Vorhersagen trifft und dergleichen.

Gegebenenfalls kann die Elektronikeinrichtung 434 auch zusätzlich mit einem externen Temperatursensor zur Erfassung der Umgebungstemperatur verknüpft sein, um in die Auswertung die Umgebungstemperatur mit einzubeziehen und beispielsweise einen relativen Temperaturanstieg an dem Steckverbinderteil 4 zu ermitteln.

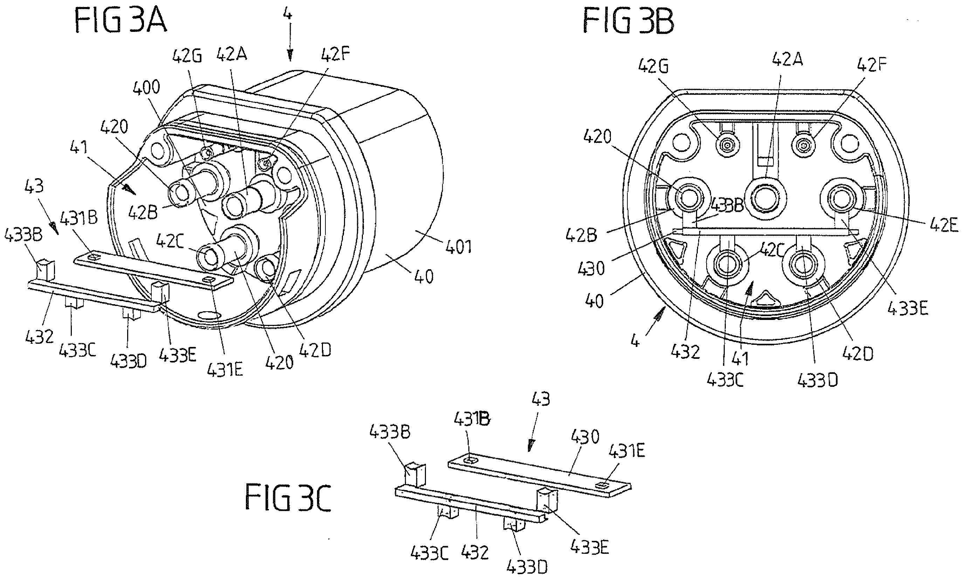

Ein modifiziertes Ausführungsbeispiel ist in Fig. 3A bis 3C dargestellt.

Das Steckverbinderteil 4 dieses Ausführungsbeispiels ist grundsätzlich baugleich zu dem Steckverbinderteil 4 des Ausführungsbeispiels gemäß Fig. 2A bis 2C. Im Unterschied zu dem Steckverbinderteil gemäß Fig. 2A bis 2C ist bei dem Steckverbinderteil 4 gemäß Fig. 3A bis 3C an der Temperatursensoreinrichtung 43 zusätzlich ein Trägerelement 432 mit daran angeordneten Leitelementen 433B-433E vorgesehen, das an der Leiterplatte 430 angeordnet ist und mit seinen Leitelementen 433B-433E zum Leiten von Infrarotstrahlung von den Kontaktelementen 42B-42E hin zu den einzelnen Sensorelementen 431B-431E dient. Jedes Leitelement 433B-433E ist gerade zwischen einem Kontaktelement 42B-42E und dem zugeordneten Sensorelement 431B-431E angeordnet derart, dass Infrarotstrahlung von dem Kontaktelement 42B-42E hin zu dem zugeordneten Sensorelement 431B-431E geleitet wird (siehe Fig. 3B in Zusammenschau mit Fig. 3C).

Die Leitelemente 433B-433E sind aus einem für Infrarotstrahlung im relevanten, zu detektierenden Wellenlängenbereich transparenten Material hergestellt und dienen zum Leiten der Strahlung.

Ansonsten ist das Ausführungsbeispiel gemäß Fig. 3A bis 3C funktionsgleich zu dem Ausführungsbeispiel gemäß Fig. 2A bis 2C, so dass auf das vorangehend Ausgeführte verwiesen werden soll.

Bei den Ausführungsbeispielen gemäß Fig. 2A bis 2C und 3A bis 3C können grundsätzlich auch Sensorelemente 41zum Einsatz kommen, die nicht als Infrarotsensoren, sondern beispielsweise als Temperatursensoren, insbesondere temperaturabhängige Widerstände, ausgebildet sind.

In diesem Fall sind die Leitelemente 433B-433E bei dem Ausführungsbeispiel gemäß Fig. 3A-3C für die Wärmeleitung optimiert (und nicht für die Leitung von Infrarotstrahlung), um Wärme von einem Kontaktelement 42B-42E hin zu einem zugeordneten Sensorelement 431B-431E zu leiten.

Ein solcher temperaturabhängiger Widerstand weist beispielsweise einen mit der Temperatur steigenden Widerstand auf (so genannter Kaltleiter oder PTC-Widerstand). Ein solcher temperaturabhängiger Widerstand kann beispielsweise eine nichtlineare Kennlinie aufweisen derart, dass bei Überschreitung einer Temperaturschwelle es zu einem nichtlinearen, abrupten Widerstandsanstieg an dem Widerstand kommt.

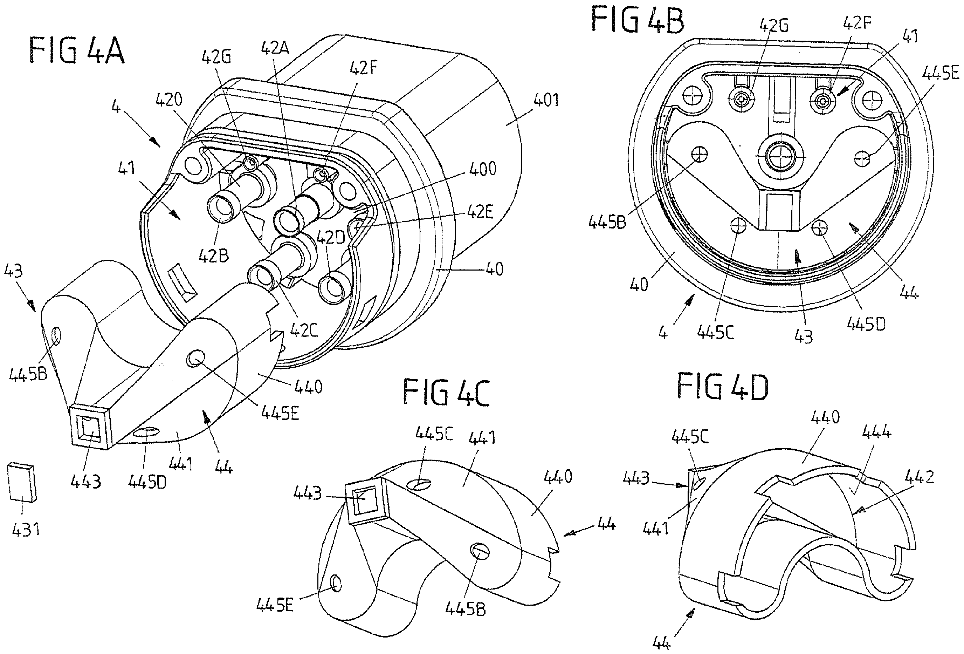

Ein anderes Ausführungsbeispiel eines Steckverbinderteils 4 ist in Fig. 4A bis 4D dargestellt.

Während das Steckverbinderteil 4 mit seinem Gehäuse 40, dem Steckabschnitt 401 und den Kontaktelementen 42A-42G gleich den Ausführungsbeispielen gemäß Fig. 2A bis 2C und 3A bis 3C ausgebildet ist, weist die Temperatursensoreinrichtung 43 bei dem Ausführungsbeispiel gemäß Fig. 4A bis 4D ein Leitelement 44 auf, das in seiner äußeren Grundform trichterförmig ausgebildet ist und das derart an den als Leistungskontakten dienenden Kontaktelementen 42B-42E angeordnet ist, dass sich die Kontaktelemente 42B-42E in einen Innenraum 442 des Leitelements 44 hinein erstrecken und mit ihren Schäften 420 zwischen dem Leitelement 44 und dem Boden 400 des Gehäuses 40 eingefasst sind.

Das Leitelement 44 umfasst einen Ansetzabschnitt 440, der den Innenraum 442 umgibt und sich um die Schäfte 420 der Kontaktelemente 42B-42E herum erstreckt. An den Ansetzabschnitt 440 schließt ein sich verjüngender Abschnitt 441 an, der in eine Öffnung 443 mündet, an die ein einzelnes Sensorelement 431 angesetzt ist.

Eine zum Innenraum 442 hin gewandte Innenwandung 444 des Ansetzabschnitts 440 und des sich verjüngenden Abschnitts 441 ist beispielsweise mit einer Infrarotstrahlung reflektierenden Beschichtung versehen oder allgemein derart beschaffen, dass die Innenwandung 444 für Infrarotstrahlung im relevanten Wellenlängenbereich reflektierend ist.

Das Leitelement 44 ist derart geformt, dass Infrarotstrahlung von den Kontaktelementen 42B-42E insgesamt hin zu dem an der Öffnung 443 angeordneten, einzelnen Sensorelement 431 geleitet wird, um dort empfangen zu werden. Mittels des Sensorelements 431 werden somit Infrarotstrahlen von allen Kontaktelementen 42B-42E innerhalb des Leitelements 44 empfangen, so dass über das Sensorelement 431 eine gesamtheitliche Temperaturinformation an allen Kontaktelementen 42B-42E gemeinsam erhalten werden kann.

An dem sich verjüngenden Abschnitt 441 des Leitelements 44 sind Durchstecköffnungen 445B-445E angeordnet, durch die hindurch Leitungen zur elektrischen Anbindung der Kontaktelemente 42B-42E geführt werden können.

Das Leitelement 44 kann beispielsweise aus Kunststoff oder auch aus einem Metallmaterial hergestellt sein. Besteht das Leitelement 44 aus Kunststoff, so ist vorzugsweise eine Beschichtung zum Reflektieren von Infrarotstrahlung an der Innenwandung 444 vorgesehen. Besteht das Leitelement 44 aus Metall, so kann die Innenwandung 444 beispielsweise poliert sein und auf eine Beschichtung gegebenenfalls auch verzichtet werden.

Der der Erfindung zugrunde liegende Gedanke ist nicht auf die vorangehend geschilderten Ausführungsbeispiele beschränkt, sondern lässt sich auch in gänzlich anders gearteter Weise verwirklichen.

Durch die Verwendung insbesondere von Sensorelementen zum Erfassen einer Infrarotstrahlung kann eine Temperaturänderung an einem oder an mehreren Kontaktelementen in zügiger Weise erkannt werden, so dass zügig Gegenmaßnahmen, beispielsweise eine Abschaltung eines Ladestroms, bewirkt werden kann. Da sich bei einem Defekt ein Temperaturanstieg an einem Kontaktelement um mehrere 100°C innerhalb weniger Sekunden ergeben kann, ermöglicht eine solche Schnellabschaltung größere Schäden zu vermeiden.

Ein Steckverbinderteil der hier beschriebenen Art ist nicht notwendigerweise als Ladestecker ausgebildet, sondern kann auch in anderer Weise Verwendung finden. Von den beschriebenen Maßnahmen kann generell an Steckverbindern zum Herstellen einer elektrischen Verbindung Gebrauch gemacht werden.

### Bezugszeichenliste

- 1: Fahrzeug
- 10: Ladebuchse
- 2: Ladestation
- 20: Ladebuchse
- 3: Ladekabel
- 4: Steckverbinderteil
- 40: Gehäuse
- 400: Boden
- 401: Steckabschnitt
- 41: Gehäuseraum
- 42A-42G: Kontaktelement (Kontaktbuchse)
- 43: Temperatursensoreinrichtung
- 430: Leiterplatte
- 430A, 430B: Seite
- 431, 431B-431E: Sensorelement
- 432: Trägerelement
- 433B-433E: Leitelement
- 434: Elektronikeinrichtung
- 44: Leitelement
- 440: Ansetzabschnitt
- 441: Sich verjüngender Abschnitt
- 442: Innenraum
- 443: Öffnung
- 444: Innenwandung
- 445B-445E: Durchstecköffnung
- E: Einsteckrichtung
- Q: Querrichtung

## Patentansprüche

1. Steckverbinderteil zum Verbinden mit einem Gegensteckverbinderteil, mit
- mindestens einem elektrischen Kontaktelement zum Führen eines elektrischen Stroms und zum Herstellen eines elektrischen Kontakts mit mindestens einem anderen Kontaktelement eines Gegensteckverbinderteils,
- einer Temperatursensoreinrichtung zum Erfassen einer Erwärmung an dem Steckverbinderteil,
wobei die Temperatursensoreinrichtung (43) mindestens ein Sensorelement (431, 431B-431E) aufweist, das ausgebildet ist, eine von dem mindestens einen elektrischen Kontaktelement (42B-42E) abgestrahlte Infrarotstrahlung zu detektieren.
**dadurch gekennzeichnet,**
**dass** die Temperatursensoreinrichtung (43) mehrere Sensorelemente (431B-431E) umfasst, wobei jedes Sensorelement (431B-431E) einem elektrischen Kontaktelement (42B-42E) des Steckverbinderteils (4) zugeordnet ist, um eine von dem zugeordneten Kontaktelement (42B-42E) abgestrahlte Infrarotstrahlung zu detektieren.

2. Steckverbinderteil nach Anspruch 1, **dadurch gekennzeichnet, dass** das mindestens eine Sensorelement (431B-431E) ausgebildet ist, eine Infrarotstrahlung in einem Wellenlängenbereich zwischen 0,7 µm und 1000 µm, insbesondere zwischen 1 µm und 100 µm, beispielsweise zwischen 3 µm und 50 µm, zu detektieren.

3. Steckverbinderteil nach Anspruch 1 oder 2, **dadurch gekennzeichnet, dass** das Steckverbinderteil (4) mehrere Kontaktelemente (42A-42G) aufweist.

4. Steckverbinderteil nach einem der Ansprüche 1 bis 3, **dadurch gekennzeichnet, dass** die Sensorelemente (431B-431E) an einer Leiterplatte (430) der Temperatursensoreinrichtung (43) angeordnet sind.

5. Steckverbinderteil nach Anspruch 4, **dadurch gekennzeichnet, dass** die Sensorelemente (431B-431E) zueinander versetzt an der Leiterplatte (430) angeordnet sind.

6. Steckverbinderteil nach Anspruch 4 oder 5, **dadurch gekennzeichnet, dass** zumindest ein Sensorelement (431B, 431E) an einer ersten Seite (430A) der Leiterplatte (430) und zumindest ein anderes Sensorelement (431C, 431D) an einer der ersten Seite (431A) abgewandten, zweiten Seite (430B) der Leiterplatte (430) angeordnet sind.

7. Steckverbinderteil nach einem der Ansprüche 4 bis 6, **dadurch gekennzeichnet, dass** die Leiterplatte (430) an dem Steckverbinderteil (4) plattenförmig entlang einer Erstreckungsebene, die durch eine Einsteckrichtung (E), in die das mindestens eine Kontaktelement steckend mit mindestens einem Kontaktelement eines Gegensteckverbinderteils in Eingriff bringbar ist, und eine Querrichtung (Q) aufgespannt ist, erstreckt ist.

8. Steckverbinderteil nach einem der Ansprüche 1 bis 7, **dadurch gekennzeichnet, dass** das mindestens eine Sensorelement (431B-431E) von dem mindestens einen Kontaktelement (42B-42E) räumlich beabstandet ist derart, dass das mindestens eine Sensorelement (431B-431E) von dem mindestens einen Kontaktelement (42B-42E) abgestrahlte Infrarotstrahlung über eine Luftschnittstelle empfängt.

9. Steckverbinderteil nach einem der Ansprüche 1 bis 7, **dadurch gekennzeichnet, dass** zwischen dem mindestens einen Sensorelement (431B-431E) und dem mindestens einen Kontaktelement (42B-42E) ein Leitelement (433B-433E, 44) zum Leiten von Infrarotstrahlung von dem mindestens einen Kontaktelement (42B-42E) hin zu dem mindestens einen Sensorelement (431B-431E) angeordnet ist.

10. Steckverbinderteil nach Anspruch 1, **gekennzeichnet durch** eine Leiterplatte (430), an der die mehreren Sensorelemente (431B-431E) angeordnet sind, aufweist, wobei jedes Sensorelement (431B-431E) einem der Kontaktelemente (42B-42E) zugeordnet ist, um eine Erwärmung an dem zugeordneten Kontaktelement (42B-42E) zu detektieren,
wobei
die Sensorelemente (431B-431E) ausgebildet sind, von den Kontaktelementen (42B-42E) abgestrahlte Infrarotstrahlung zu detektieren, und dass zwischen jedem Sensorelement (431B-431E) und dem zugeordneten Kontaktelement (42B-42E) ein Leitelement (433B-433E) zum Leiten von Infrarotstrahlung hin zu dem Sensorelement (431B-431E) angeordnet ist.

11. Steckverbinderteil nach Anspruch 10, **dadurch gekennzeichnet, dass** die Sensorelemente (431B-431E) als Temperatursensoren, insbesondere als temperaturabhängiger Widerstand, zum Erfassen einer Temperaturänderung an den Kontaktelementen (42B-42E) ausgebildet sind.

12. Steckverbinderteil nach Anspruch 11, **dadurch gekennzeichnet, dass** zwischen jedem Sensorelement (431B-431E) und dem zugeordneten Kontaktelement (42B-42E) ein Leitelement (433B-433E) zum Leiten von Wärme angeordnet ist.

## Claims

1. Plug-in connector part for connection to a mating plug-in connector part, comprising
- at least one electrical contact element for carrying an electric current and for establishing electrical contact with at least one other contact element of a mating plug-in connector part,
- a temperature sensor device for detecting heating at the plug-in connector part,
wherein the temperature sensor device (43) has at least one sensor element (431, 431B-431E) which is designed to detect infrared radiation which is emitted by the at least one electrical contact element (42B-42E), **characterized**
**in that** the temperature sensor device (43) comprises a plurality of sensor elements (431B-431E), wherein each sensor element (431B-431E) is associated with an electrical contact element (42B-42E) of the plug-in connector part (4) in order to detect infrared radiation which is emitted by the associated contact element (42B-42E).

2. Plug-in connector part according to Claim 1, **characterized in that** the at least one sensor element (431B-431E) is designed to detect infrared radiation in a wavelength range of between 0.7 µm and 1000 µm, in particular of between 1 µm and 100 µm, for example of between 3 µm and 50 µm.

3. Plug-in connector part according to Claim 1 or 2, **characterized in that** the plug-in connector part (4) has a plurality of contact elements (42A-42G).

4. Plug-in connector part according to one of Claims 1 to 3, **characterized in that** the sensor elements (431B-431E) are arranged on a printed circuit board (430) of the temperature sensor device (43).

5. Plug-in connector part according to Claim 4, **characterized in that** the sensor elements (431B-431E) are arranged on the printed circuit board (430) in a manner offset in relation to one another.

6. Plug-in connector part according to Claim 4 or 5, **characterized in that** at least one sensor element (431B, 431E) is arranged on a first side (430A) of the printed circuit board (430) and at least one other sensor element (431C, 431D) is arranged on a second side (430B) of the printed circuit board (430), the said second side being averted from the first side (431A).

7. Plug-in connector part according to one of Claims 4 to 6, **characterized in that** the printed circuit board (430) extends on the plug-in connector part (4) in a plate-like manner along a plane of extent which is spanned by an insertion direction (E), in which the at least one contact element can be brought into engagement in a plug-connected manner with at least one contact element of a mating plug-in connector part, and a transverse direction (Q).

8. Plug-in connector part according to one of Claims 1 to 7, **characterized in that** the at least one sensor element (431B-431E) is physically spaced apart from the at least one contact element (42B-42E) in such a way that the at least one sensor element (431B-431E) receives infrared radiation, which is emitted by the at least one contact element (42B-42E), via an air interface.

9. Plug-in connector part according to one of Claims 1 to 7, **characterized in that** a conducting element (433B-433E, 44) for conducting infrared radiation from the at least one contact element (42B-42E) to the at least one sensor element (431B-431E) is arranged between the at least one sensor element (431B-431E) and the at least one contact element (42B-42E).

10. Plug-in connector part according to Claim 1, **characterized by** a printed circuit board (430) on which the plurality of sensor elements (431B-431E) are arranged, has, wherein each sensor element (431B-431E) is associated with one of the contact elements (42B-42E) in order to detect heating at the associated contact element (42B-42E), wherein the sensor elements (431B-431E) are designed to detect infrared radiation which is emitted by the contact elements (42B-42E), and that a conducting element (433B-433E) for conducting infrared radiation to the sensor element (431B-431E) is arranged between each sensor element (431B-431E) and the associated contact element (42B-42E).

11. Plug-in connector part according to Claim 10, **characterized in that** the sensor elements (431B-431E) are designed as temperature sensors, in particular as a temperature-dependent resistor, for detecting a change in temperature at the contact elements (42B-42E).

12. Plug-in connector part according to Claim 11, **characterized in that** a conducting element (433B-433E) for conducting heat is arranged between each sensor element (431B-431E) and the associated contact element (42B-42E).

## Revendications

1. Connecteur enfichable pour liaison avec un contre-connecteur enfichable, avec
- au moins un élément de contact électrique pour guider un courant électrique et pour réaliser un contact électrique avec au moins un autre élément de contact d'un contre-connecteur enfichable,
- un dispositif de capteur de température (43) pour saisir un échauffement sur le connecteur enfichable,
le dispositif de capteur de température (43) comportant au moins un élément de capteur (431,431B-431E), qui est constitué pour détecter un rayonnement infrarouge émis par au mois un élément de contact électrique (42B-42E),
**caractérisé en ce que**
le dispositif de capteur de température (43) comprend plusieurs éléments de capteur (431B-431E), chaque élément de capteur (431B-431E) étant attribué à un élément de contact électrique (42B-42E) du connecteur enfichable (4) pour détecter un rayonnement infrarouge émis par l'élément de contact attribué (42B-42E).

2. Connecteur enfichable selon la revendication 1 **caractérisé en ce qu'**au moins un élément de capteur (431B-431E) est constitué pour détecter un rayonnement infrarouge dans une gamme de longueurs d'ondes se situant entre 0,7 µm et 1000 µm, notamment entre 1 µm et 100 µm, par exemple entre 3 µm et 50 µm.

3. Connecteur enfichable selon la revendication 1 ou 2, **caractérisé en ce que** le connecteur enfichable (4) comporte plusieurs éléments de contact (42A-42G) .

4. Connecteur enfichable selon l'une quelconque des revendications 1 à 3 **caractérisé en ce que** les éléments de capteur (431B-431E) sont disposés sur une carte de circuits imprimés (430) du dispositif de capteur de température (43).

5. Connecteur enfichable selon la revendication 4 **caractérisé en ce que** les éléments de contact (431B-431E) sont disposés décalés l'un par rapport à l'autre sur la carte de circuits imprimés (430).

6. Connecteur enfichable selon la revendication 4 ou 5 **caractérisé en ce qu'**au moins un élément de capteur (431B-431E) est disposé sur une première face (430A) de la carte de circuits imprimés (430) et au moins un autre élément de contact (431C, 431D) est disposé sur une deuxième face (430B) de la carte de circuits imprimés (430), opposée à la première face (431A).

7. Connecteur enfichable selon l'une quelconque des revendications 4 à 6, **caractérisé en ce que** la carte de circuits imprimés (430) est étendue sur le connecteur enfichable (4) en forme de plaque le long d'un plan d'extension qui est fixé par une direction d'enfichage (E) dans laquelle au moins un élément de contact peut être mis en prise s'enfichant avec au moins un élément de contact d'un contre-connecteur enfichable, et par une direction transversale (Q).

8. Connecteur enfichable selon l'une quelconque des revendications 1 à 7 **caractérisé en ce qu'**au moins un élément de capteur (431B-431E) est à distance dans l'espace d'au moins un élément de contact (42B-42E) de telle sorte qu'au moins un élément de capteur (431B-431E) reçoit par le biais d'une interface radio un rayonnement infrarouge émis par au moins un élément de contact (42B-42E).

9. Connecteur enfichable selon l'une quelconque des revendications 1 à 7 **caractérisé en ce qu'**un élément conducteur (433B-433E-,44) pour diriger le rayonnement infrarouge d'au moins un élément de contact (42B-42E) vers au moins un élément de capteur (43. 1B-431E) est disposé entre au moins un élément de capteur (431B-431E) et au moins un élément de contact (42B-42E).

10. Connecteur enfichable selon la revendication 1 **caractérisé par** une carte de circuits imprimés (430) sur laquelle sont disposés plusieurs éléments de capteur (431B-431E), a, chaque élément de capteur (431B-431E) étant attribué à un des éléments de contact (42B-42E) pour détecter un échauffement sur l'élément de contact attribué (42B-42E), les éléments de capteur (431B-431E) étant constitués pour détecter un rayonnement infrarouge émis par les éléments de contact (42B-42E) et **en ce qu'**entre chaque élément de capteur (431B-431E) et l'élément de contact attribué (42B-42E) est disposé un élément conducteur (433B-433E) pour diriger le rayonnement infrarouge vers l'élément de capteur (431B-431E).

11. Connecteur enfichable selon la revendication 10 **caractérisé en ce que** les éléments de capteur (431B-431E) sont constitués en tant que capteurs de température, notamment comme résistance en fonction de la température, pour saisir une variation de température sur les éléments de contact (42B-42E).

12. Connecteur enfichable selon la revendication 11 **caractérisé en ce qu'un** élément conducteur (433B-433E) pour diriger de la chaleur est disposé entre chaque élément de capteur (431B-431E) et l'élément de contact attribué (42B-42E).
